# EUROPÄISCHE PATENTSCHRIFT

(11) **EP 3 273 136 B1**
(45) Veröffentlichungstag und Bekanntmachung des Hinweises auf die Patenterteilung: **25.09.2019**
(21) Anmeldenummer: 17176406.1
(22) Anmeldetag: 16.06.2017
(51) Int. Cl.: F16N 39/06, F01M 1/10, F16N 39/00, F01M 11/00

(54) **VORRICHTUNG ZUM LEITEN VON SCHMIERMITTEL AUS EINEM SCHMIERMITTELSAMMELBEHÄLTER**
DEVICE FOR GUIDING LUBRICANT OUT OF A LUBRICANT STORAGE CONTAINER
DISPOSITIF DE GUIDAGE DE LUBRIFIANT PROVENANT D'UN RÉCIPIENT DE COLLECTE DE LUBRIFIANT

(30) Priorität: 23.06.2016 DE 102016007703
(43) Veröffentlichungstag der Anmeldung: 24.01.2018
(73) Patentinhaber: MAN Truck & Bus SE, 80995 München (DE)
(72) Erfinder: Hügel, Dietmar, 90441 Nürnberg (DE)
(74) Vertreter: v. Bezold & Partner Patentanwälte - PartG mbB

(56) Entgegenhaltungen:
- WO-A1-2015/066111
- DE-B- 1 293 723
- JP-A- 2004 293 376
- JP-B2- 3 006 246
- JP-U- S49 147 431
- US-A1- 2014 311 240

## Beschreibung

Die Erfindung betrifft eine Vorrichtung zur Förderung von Schmiermittel aus einem Schmiermittelsammelbehälter einer Maschine zu einer Schmiermittelpumpe. wobei die Vorrichtung ein Schmiermittelsaugrohr umfasst. Die Maschine kann eine Brennkraftmaschine sein oder auch eine sonstige Maschine, z. B. einer Hydraulikanlage. Die Schmiermittelpumpe kann eine Schmiermittelpumpe für einen Ölkreislauf einer Brennkraftmaschine sein,
Aus dem Stand der Technik sind Ölsaugrohre zur Förderung von Schmiermittel aus einem Ölsumpf einer Ölwanne zu einer Ölpumpe, insbesondere für einen Ölkreislauf einer Brennkraftmaschine bekannt.

Das Schmiermittel wird üblicherweise auch als Öl bezeichnet, auch wenn dies heute häufig kein Öl mehr ist. Entsprechend werden die hierfür erforderlichen Schmiermittelsaugrohre als Ölsaugrohre und die Schmiermittelpumpen üblicherweise auch als Ölpumpen oder Öldruckpumpen bezeichnet. Die Begriffe Öl und Schmiermittel sind daher im Rahmen der vorliegenden Erfindung als gleichbedeutend anzusehen.

Derartige Schmiermittelsaugrohre bzw. Ölsaugrohre sind beispielsweise aus den Offenlegungsschriften DE 30 22 443 C2 und DE 10 2005 005 138 A1 bekannt. Derartige an sich bekannte Ölsaugrohre leiten ungefiltertes Schmiermittel zur Ölpumpe. Dies kann dazu führen, dass die Ölpumpe mit ölfremden Partikeln in Berührung kommt und dadurch geschädigt wird.

Zur Abscheidung ölfremder Partikel im Schmieröl schlägt die WO 2015/066111 A1 einen Behälter, umfassend einen Einlass, einen Auslass und eine Filteranordnung mit mehreren hintereinander angeordneten trichterförmigen Elementen, vor. Nachteilig an dieser Lösung ist allerdings, dass die Filterelemente regelmäßig ausgetauscht werden müssen.

In der JP 2004 293376 A und der DE 12 93 723 B werden weitere Schmiermittelsaugrohre mit zwischengeschalteten Behältern offenbart.

Es ist somit eine Aufgabe der Erfindung, eine verbesserte Vorrichtung zur Förderung von Schmiermittel aus einem Schmiermittelsammelbehälter einer Brennkraftmaschine zu einer Schmiermittelpumpe bereitzustellen, mit der Nachteile herkömmlicher Vorrichtungen vermieden werden können. Die Aufgabe der Erfindung ist es insbesondere, eine Vorrichtung bereitzustellen, bei der über ein Schmiermittelsaugrohr Schmiermittel aus einem Schmiermittelsammelbehälter zu einer Schmiermittelpumpe förderbar ist, wobei die Verschmutzung der Ölpumpe mit ölfremden Partikeln verhindert oder zumindest reduziert werden soll.

Diese Aufgaben werden durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung werden die genannten Aufgaben dadurch gelöst, dass Schmiermittel, das von einer Schmiermittelpumpe über ein Schmiermittelsaugrohr aus einem Schmiermittelsammelbehälter angesaugt wird, vor Erreichen der Schmiermittelpumpe durch einen Sedimentationsbehälter geleitet wird. Der Sedimentationsbehälter ist ein Behälter, durch den das Schmiermittel auf dem Weg vom Schmiermittelsammelbehälter zur Schmiermittelpumpe strömt und der eine Querschnittserweiterung auf einem Teilabschnitt der Förderstrecke des Schmiermittels vom Schmiermittelsammelbehälter zur Schmiermittelpumpe bewirkt. Der Sedimentationsbehälter, insbesondere die Querschnittserweiterung, reduziert die Strömungsgeschwindigkeit des Schmiermittels und ermöglicht dadurch eine Ablagerung von Partikeln in dem Sedimentationsbehälter. Dadurch kann auf konstruktiv einfache Weise sichergestellt werden, dass Schmutzpartikel, die sich in dem aus dem Schmiermittelbehälter angesaugten Schmiermittel befinden, auf dem Weg zur Schmiermittelpumpe vor Erreichen der Schmiermittelpumpe zumindest zum Teil abgeschieden und zurückgehalten werden.

Erfindungsgemäß wird somit eine Vorrichtung zum Leiten bzw. zur Förderung bzw. Beförderung von Schmiermittel aus einem Schmiermittelsammelbehälter zu einer Schmiermittelpumpe bereitgestellt, wobei die Vorrichtung ein Schmiermittelsaugrohr und einen Sedimentationsbehälter, der fluidisch mit dem Schmiermittelsaugrohr verbunden ist, aufweist. Die Vorrichtung kann insbesondere eine derartige Vorrichtung für einen Ölkreislauf einer Brennkraftmaschine sein. Gemäß dieser Variante ist der Schmiermittelsammelbehälter ein Schmiermittelsammelbehälter eines Ölkreislaufs der Brennkraftmaschine. Der Schmiermittelsammelbehälter kann jedoch auch ein Schmiermittelsammelbehälter einer sonstigen Maschine oder einer Hydraulikanlage sein.

Der Schmiermittelsammelbehälter kann ein Ölreservoir, insbesondere eine Ölwanne einer Brennkraftmaschine sein. Das Schmiermittelsaugrohr wird nachfolgend auch als Ölsaugrohr bezeichnet.

Der Sedimentationsbehälter ist vorzugsweise zwischen einer Schmiermitteleintrittsöffnung und einer Schmiermittelaustrittsöffnung des Schmiermittelsaugrohres angeordnet bzw. eingebaut. Der Sedimentationsbehälter ist insbesondere derart zwischen dem Schmiermittelsammelbehälter und der Schmiermittelpumpe angeordnet, dass aus dem Schmiermittelbehälter gesaugtes Schmiermittel vor Erreichen der Schmiermittelpumpe in dem Sedimentationsbehälter eingeleitet wird, wobei der Sedimentationsbehälter infolge seiner Größe und/oder Form eine kontinuierliche Teilchensedimentation ermöglicht, so dass sich am Boden des Sedimentationsbehälters eine Suspension anreichert, die gegenüber der Gesamtsuspension an gröberen Teilchen angereichert ist.

Es wird betont, dass die geometrische und/oder konstruktive Ausführung des Sedimentationsbehälters nicht auf eine bestimmte Ausführung beschränkt ist und vielmehr an die konstruktiven Gegebenheiten bzw. dem verfügbaren Bauraum angepasst werden kann. Vorstehend wurde bereits erwähnt, dass der Sedimentationsbehälter derart ausgeführt ist, dass er für das angesaugte Schmiermittel im Vergleich zu den übrigen Abschnitten des Schmiermittelsaugrohrs eine Querschnittserweiterung erzeugt, aufgrund derer die Strömungsgeschwindigkeit des angesaugten Schmiermittels reduziert wird, wodurch Verunreinigungspartikel sedimentieren können. Die im Schmiermittel enthaltenen ölfremden Partikel können sich daher großflächig in dünnen Schichten im Bodenbereich des Sedimentationsbehälters ablagern.

Eine bevorzugte Ausführungsform sieht hierbei vor, dass das Schmiermittelsaugrohr einen ersten Rohrabschnitt aufweist, mittels dessen Schmiermittel aus dem Schmiermittelsammelbehälter einer Einlassöffnung des Sedimentationsbehälters zuführbar ist. Das Schmiermittelsaugrohr weist ferner gemäß dieser Ausführungsform einen zweiten Rohrabschnitt auf, mittels dessen aus einer Auslassöffnung des Sedimentationsbehälters austretendes Schmiermittel in Richtung einer Schmiermittelpumpe förderbar ist.

Gemäß einer alternativen Ausführungsform kann ein Endbereich des Schmiermittelsaugrohrs mit einer Einlassöffnung des Sedimentationsbehälters fluidisch verbunden sein, und eine Auslassöffnung des Sedimentationsbehälters kann über ein Anschlussstück fluidisch direkt mit der Schmiermittelpumpe verbunden sein.

Zur Erhöhung der Sedimentationswirkung des Sedimentationsbehälters weist der Sedimentationsbehälter erfindungsgemäß einen Turbulator auf. Dabei ist es besonders vorteilhaft, wenn der Turbulator im Bereich einer Einlassöffnung des Sedimentationsbehälters angeordnet ist.

Als Turbulatoren werden Elemente bezeichnet, die für den angesaugten Schmiermittelstrom ein Strömungshindernis darstellen und beim Überströmen zu einer Verwirbelung, also zu einer Ausbildung von Turbulenzen führt. Ein Turbulator ist somit ein Bauteil und/oder eine Oberflächenstrukturierung, welche beim Durchströmen mit Schmiermittel als Turbulenzerzeuger wirken. Aufgrund der erzeugten Turbulenzen wird die Sedimentationsrate von ölfremden Partikeln im Sedimentationsbehälter erhöht.

Zur Verbesserung der Wartungsfreundlichkeit kann der Sedimentationsbehälter einen im Boden angeordneten Ablassanschluss aufweisen. Dadurch kann auf einfache Weise die sich mit der Zeit am Boden angereicherte Suspension abgezogen werden, ohne dass der Sedimentationsbehälter demontiert oder ausgetauscht werden muss.

Ferner kann der Sedimentationsbehälter einen Befüllungsanschluss und/oder einen Inspektionsanschluss aufweisen. Diese Anschlüsse sind vorzugsweise im Vergleich zu dem Ablassanschluss höher angeordnet, also nicht im Bodenbereich. Über den Befüllungsanschluss kann der Sedimentationsbehälter mit Schmiermittel vorgefüllt werden. Der Befüllungsanschluss kann auch zum Spülen genutzt werden. Der Befüllungsanschluss befindet sich vorzugsweise auf mittlerer Höhe des Sedimentationsbehälters oder in einer oberen Hälfte des Sedimentationsbehälters. In einer unteren Hälfte des Sedimentationsbehälters ist vorzugsweise der Inspektionsanschluss angeordnet. Über den Inspektionsanschluss kann beispielsweise die Menge an sedimentiertem Material im Bodenbereich des Sedimentationsbehälters geprüft werden. Der Ablassanschluss, der Befüllungsanschluss und/oder der Inspektionsanschluss können jeweils als verschließbare Öffnungen ausgeführt sein, an denen wahlweise auch eine Leitung anschließbar ist.

Im Rahmen der Erfindung besteht die Möglichkeit, dass der Sedimentationsbehälter als separates Bauteil ausgeführt ist, das fluidisch mit dem Schmiermittelsaugrohr verbunden ist. Der Sedimentationsbehälter kann beispielsweise zwischen den beiden Rohrabschnitten des Schmiermittelsaugrohrs, wie vorstehend beschrieben wurde, angeordnet sein, so dass das aus dem ersten Rohrabschnitt austretende Schmiermittel in den Sedimentationsbehälter strömt und nach Durchströmen des Sedimentationsbehälters in den zweiten Rohrabschnitt eintritt.

Der Sedimentationsbehälter kann jedoch auch einen eine Querschnittserweiterung aufweisenden Mittelabschnitt des Schmiermittelsaugrohrs bilden. In diesem Fall ist der Sedimentationsbehälter als integraler Bestandteil des Schmiermittelsaugrohrs ausgeführt.

Ferner kann das Schmiermittelsaugrohr an seinem einlassseitigen Ende einen Saugkorb aufweisen. Das einlassseitige Ende ist dasjenige Ende, das in einem Schmiermittelsumpf eines Schmiermittelbehälters einsteckbar ist.

Gemäß einer weiteren Ausführungsform umfasst die Vorrichtung ferner den Schmiermittelsammelbehälter. Aus baumraumtechnischen Gründen ist es ferner besonders vorteilhaft, wenn der Sedimentationsbehälter in den Schmiermittelsammelbehälter integriert ist und/oder von diesem umhaust ist. Der Sedimentationsbehälter kann jedoch auch außerhalb des Schmiermittelsammelbehälters angeordnet sein.

Gemäß einer weiteren bevorzugten Ausführungsform der Erfindung kann die Vorrichtung zur Förderung von Schmiermitteln ferner die Schmiermittelpumpe aufweisen, wobei die Schmiermittelpumpe ausgebildet ist, Schmiermittel aus dem Schmiermittelsammelbehälter über das Schmiermittelsaugrohr und den Sedimentationsbehälter anzusaugen und Verbrauchern zuzuführen. Hierbei kann der Schmiermittelsammelbehälter die Ölwanne einer Brennkraftmaschine sein und die Schmiermittelpumpe kann eine Ölpumpe sein.

Gemäß einem weiteren Aspekt der Erfindung wird ein Kraftfahrzeug, insbesondere ein Nutzfahrzeug, bereitgestellt, mit einer Vorrichtung zur Förderung von Schmiermittel, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine stark schematisierte Darstellung einer Vorrichtung zur Förderung von Schmiermittel; und
- Figur 2: eine stark schematisierte Darstellung einer Vorrichtung zur Förderung von Schmiermittel gemäß der Erfindung.

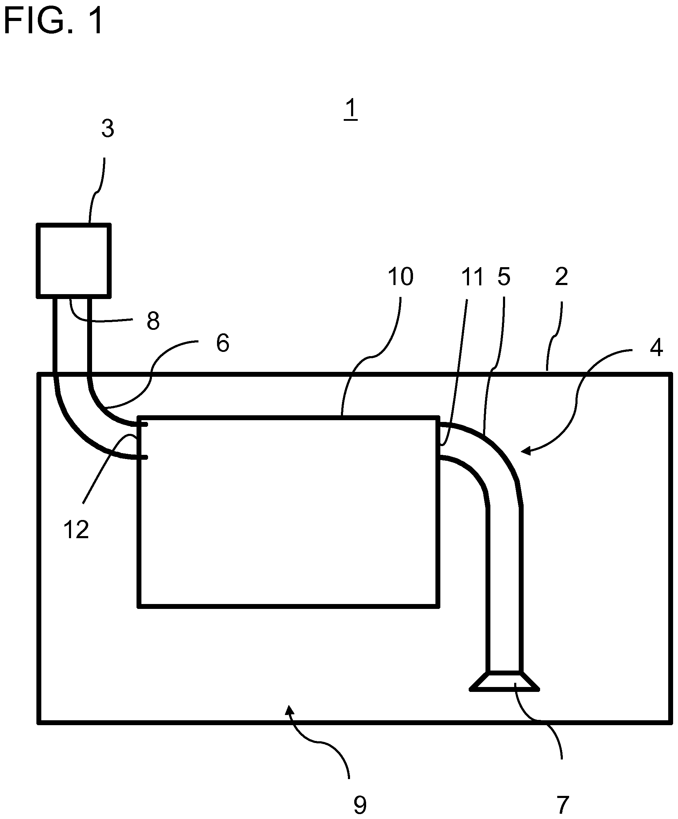

Figur 1 zeigt in einer stark schematisierten Prinzipdarstellung eine Ölwanne 2 einer Brennkraftmaschine eines Kraftfahrzeuges, die unterhalb des Motors am Kurbelgehäuse (nicht dargestellt) befestigt ist.

Die Ölwanne 2 ist mit einem Ölsammelbereich 9 ausgebildet, der aus einem in Einbaulage der Brennkraftmaschine in einem Kraftfahrzeug oberhalb der Ölwanne 2 angeordneten Motorblock der Brennkraftmaschine strömendes Öl bzw. Motoröl auffängt und als ein Sammelbecken (Ölsumpf) für das Motoröl dient. Das mit dem Ölsammelbereich 9 angesammelte Öl wird von einer Ölpumpe 3 durch ein Schmiermittelsaugrohr 4 angesaugt. Das Schmiermittelsaugrohr 4 weist hierbei an seinem einlassseitigen Ende einen Saugkorb 97 auf, der in den Ölsumpf eintaucht. Das aus dem Auslass 8 des Ölsaugrohrs 4 austretende Schmiermittel wird dann der Schmiermittelpumpe 3 durch deren Saugleistung zugeführt.

Eine Besonderheit der erfindungsgemäßen Vorrichtung 1 zur Förderung von Schmiermittel aus der Ölwanne 2 zu der Schmiermittelpumpe 3 liegt nun darin, dass das Ölsaugrohr 4 fluidisch mit einem Sedimentationsbehälter 10 verbunden ist. Gemäß der in Figur 1 gezeigten Ausführungsvariante weist das Ölsaugrohr 4 hierzu einen ersten Rohrabschnitt 5 auf, mittels dessen Schmiermittel aus der Ölwanne einer Einlassöffnung 11 des Sedimentationsbehälters 10 zuführbar ist. Ferner weist das Ölsaugrohr 4 einen zweiten Rohrabschnitt 6 auf, mittels dessen das aus einer Auslassöffnung 12 des Sedimentationsbehälters 10 austretende Schmiermittel in Richtung der Ölpumpe 3 förderbar ist bzw. im Betrieb gefördert wird. Der Sedimentationsbehälter 10 ist hier als separates Bauteil ausgeführt, der fluidisch mit den beiden Rohrabschnitten 5, 6 des Ölsaugrohrs 4 verbunden ist, so dass das aus der Ölwanne 2 angesaugte Öl auf dem Weg zur Ölpumpe 3 durch den Sedimentationsbehälter 10 strömen muss.

Der Sedimentationsbehälter 10 bewirkt, dass ölfremde Partikel darin abgeschieden werden. Der Sedimentationsbehälter 10, z.B. in Form eines Sedimentationskastens, bewirkt eine Querschnittserweiterung für den Ölstrom, dessen Strömungsgeschwindigkeit sich dadurch reduziert und dadurch eine Ablagerung von Partikeln ermöglicht, die sich im Bodenbereich des Sedimentationsbehälters 10 ansammeln. Auf diese Weise werden Schmutzpartikel auf dem Weg zur Ölpumpe 3 in dem Sedimentationsbehälter abgeschieden und zurückgehalten.

Die Einlassöffnung 11 und die Auslassöffnung 12 des Sedimentationsbehälters befinden sich in einem oberen Bereich des Sedimentationsbehälters, so dass der erste Rohrabschnitt 5 und der zweite Rohrabschnitt 6 jeweils in einen oberen Bereich des Sedimentationsbehälters münden, wodurch sich die abgeschiedenen sedimentierten Partikel im unteren Bereich des Sedimentationsbehälters 10 ansammeln können.

Wie in Figur 1 ferner erkennbar ist, ist der Sedimentationsbehälter im Inneren der Ölwanne 2 angeordnet und wird von dieser umhaust.

Gemäß einer weiteren Ausführungsform der Erfindung kann der Sedimentationskasten außerhalb der Ölwanne angeordnet sein.

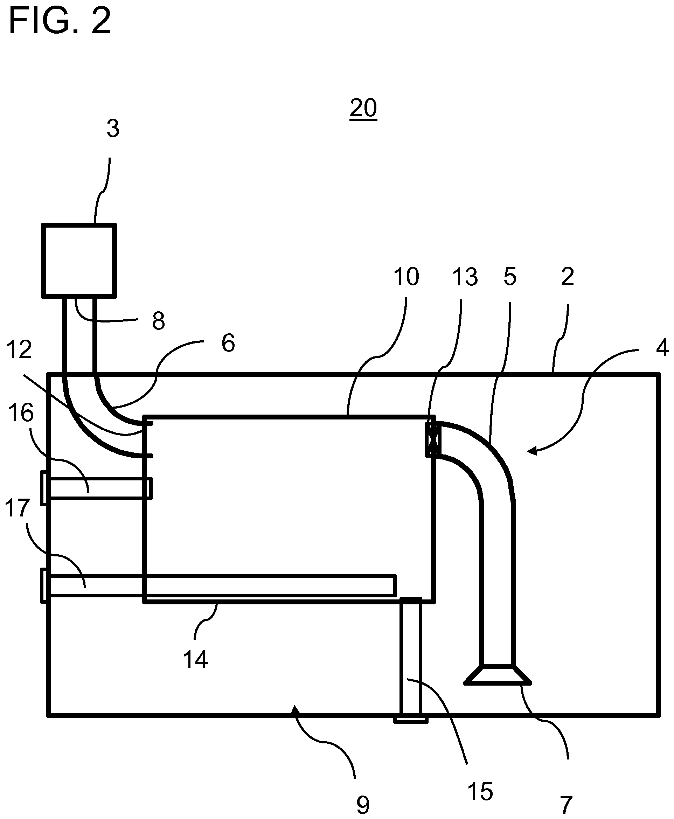

Figur 2 illustriert eine weitere Ausführungsform der Erfindung, ebenfalls in einer stark schematisierten Prinzipdarstellung. Hierbei sind gleiche oder funktional äquivalente Elemente mit denselben Bezugszeichen wie in der Figur 1 bezeichnet und werden zum Teil nicht gesondert beschrieben.

Nachfolgend wird lediglich auf die Besonderheiten der in Figur 2 gezeigten Ausführungsvariante eingegangen. Eine Besonderheit liegt darin, dass im Bereich der Einlassöffnung 11 des Sedimentationsbehälters 10 ein Turbulator 13 angeordnet ist. Der Turbulator 13 ist ein Bauteil, das beim Durchströmen mit Schmiermittel als Turbulenzerzeuger wirkt. Dadurch erhöht sich die Rate, mit der sich Partikel im Bodenbereich des Sedimentationsbehälters durch Sedimentation ablagern.

Der Turbulator 13 kann beispielsweise als ein Strömungsorgan ausgeführt werden, welches eine Verwirbelung des strömenden Mediums erzeugt. Die dabei erzeugte Wirbelströmung zwingt den Partikeln eine Querbewegung und/oder Querströmung auf, welche die Ablagerung von Partikeln begünstigt.

Turbulatoren können konstruktiv sehr unterschiedlich ausgeführt werden. Es können verdrillte Bleche im Rohrinneren sein, Leiträder, Umlenkbleche, Blenden mit besonderen Bohrungen (z.B. schräg angeordnete Bohrungen), und/oder jegliche Geometrie welche eine Verwirbelung erzeugen kann.

Gemeinsames Merkmal aller Ausführungen ist die Erzeugung einer Verwirbelung, eines Dralls, und/oder einer Drehbewegung um die Achse der Hauptströmungsrichtung. Damit sollen Partikel aus der Hauptströmung herausgelöst und Richtung Wand geleitet und dort abgelagert werden.

Ferner weist der Sedimentationsbehälter 10 im Bodenbereich einen Anschluss 15 auf, der als Ablass genutzt werden kann, um abgelagerte Suspension, die gegenüber der Gesamtsuspension an gröberen Teilchen angereichert ist, abzulassen. Dieser Ablassanschluss 15 kann in Kombination mit einem Befüllungsanschluss 16, der sich in einem oberen Teilbereich des Sedimentationsbehälters 10 befindet, auch zum Spülen des Sedimentationsbehälters 10 verwendet werden. Im unteren Teilbereich des Sedimentationsbehälters 10 befindet sich ferner ein Inspektionsanschluss 17. Dieser Anschluss kann benutzt werden, um beispielsweise Proben an sedimentierter Substanz aus dem Bodenbereich zu entnehmen oder auch für Reinigungszwecke verwendet werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die unter den Schutzbereich der Patentansprüche fallen.

### Bezugszeichenliste

- 1: Vorrichtung zur Förderung von Schmiermittel
- 2: Schmiermittelsammelbehälter, z.B. Ölwanne
- 3: Schmiermittelpumpe, z.B. Ölpumpe
- 4: Schmiermittelsaugrohr, z.B. Hüllsaugrohr
- 5: Erster Rohrabschnitt
- 6: Zweiter Rohrabschnitt
- 7: Saugkorb
- 8: Auslass des Schmiermittelsaugrohrs
- 9: Schmiermittelsammelbereich
- 10: Sedimentationsbehälter
- 11: Einlassöffnung
- 12: Auslassöffnung
- 13: Turbulator
- 14: Bodenbereich
- 15: Ablassanschluss
- 16: Befüllungsanschluss
- 17: Inspektionsanschluss
- 20: Vorrichtung zur Förderung von Schmiermittel

## Patentansprüche

1. Vorrichtung (1; 20) zum Leiten von Schmiermittel aus einem Schmiermittelsammelbehälter (2) einer Maschine oder Hydraulikanlage, insbesondere einer Brennkraftmaschine, zu einer Schmiermittelpumpe (3), insbesondere für einen Ölkreislauf einer Brennkraftmaschine, umfassend
ein Schmiermittelsaugrohr (4), und
einen Sedimentationsbehälter (10), der fluidisch mit dem Schmiermittelsaugrohr (4) verbunden ist, **dadurch gekennzeichnet, dass** der Sedimentationsbehälter (10) einen Turbulator (13) aufweist.

2. Vorrichtung nach Anspruch 1, **dadurch gekennzeichnet, dass** das Schmiermittelsaugrohr (4)
a) einen ersten Rohrabschnitt (5) aufweist, mittels dessen Schmiermittel aus dem Schmiermittelsammelbehälter (2) einer Einlassöffnung (11) des Sedimentationsbehälters (10) zuführbar ist, und
b) einen zweiten Rohrabschnitt (6) aufweist, mittels dessen aus einer Auslassöffnung (12) des Sedimentationsbehälters (10) austretendes Schmiermittel in Richtung einer Schmiermittelpumpe (3) förderbar ist.

3. Vorrichtung nach einem der vorhergehenden Ansprüche, **dadurch gekennzeichnet, dass** der Turbulator (13) im Bereich einer Einlassöffnung (11) des Sedimentationsbehälters (10) angeordnet ist.

4. Vorrichtung nach einem der vorhergehenden Ansprüche, **dadurch gekennzeichnet, dass** der Sedimentationsbehälter (10) einen im Bodenbereich (14) angeordneten Ablassanschluss (15) aufweist.

5. Vorrichtung nach einem der vorhergehenden Ansprüche, **dadurch gekennzeichnet, dass** der Sedimentationsbehälter (10) einen Befüllungsanschluss (16) und/oder einen Inspektionsanschluss (17) aufweist.

6. Vorrichtung nach einem der vorhergehenden Ansprüche, **dadurch gekennzeichnet, dass** der Sedimentationsbehälter einen eine Querschnittserweiterung aufweisenden Abschnitt des Schmiermittelsaugrohrs bildet.

7. Vorrichtung nach einem der vorhergehenden Ansprüche, **dadurch gekennzeichnet, dass** der Sedimentationsbehälter (10) als separates Bauteil ausgeführt ist, das fluidisch mit dem Schmiermittelsaugrohr (4) verbunden ist.

8. Vorrichtung nach einem der vorhergehenden Ansprüche, **dadurch gekennzeichnet, dass** das Schmiermittelsaugrohr (4) an seinem einlassseitigen Ende einen Saugkorb (7) aufweist.

9. Vorrichtung nach einem der vorhergehenden Ansprüche, ferner umfassend den Schmiermittelsammelbehälter (2).

10. Vorrichtung nach Anspruch 9, **dadurch gekennzeichnet,**
a) **dass** der Sedimentationsbehälter (10) in den Schmiermittelsammelbehälter (2) integriert ist und/oder von diesem umhaust ist; oder
b) **dass** der Sedimentationsbehälter außerhalb des Schmiermittelsammelbehälters (2) angeordnet ist.

11. Vorrichtung nach einem der Ansprüche 9 oder 10, **dadurch gekennzeichnet, dass** der Schmiermittelsammelbehälter (2) eine Ölwanne einer Brennkraftmaschine ist.

12. Vorrichtung nach einem der vorhergehenden Ansprüche, ferner umfassend die Schmiermittelpumpe (3), insbesondere eines Ölkreislaufs einer Brennkraftmaschine.

13. Vorrichtung nach Anspruch 11 und 12, wobei die Schmiermittelpumpe ausgebildet ist, Schmiermittel aus der Ölwanne über das Schmiermittelsaugrohr (4) und den Sedimentationsbehälter (10) anzusaugen und Verbrauchern zuzuführen.

14. Kraftfahrzeug, insbesondere Nutzfahrzeug, aufweisend eine Vorrichtung (1) nach einem der vorhergehenden Ansprüche.

## Claims

1. Device (1; 20) for passing lubricant out of a lubricant collecting container (2) of a machine or hydraulic system, in particular an internal combustion engine, to a lubricant pump (3), in particular for an oil circuit of an internal combustion engine, comprising
a lubricant intake pipe (4), and
a sedimentation container (10), which is connected fluidically to the lubricant intake pipe (4), **characterized in that** the sedimentation container (10) has a turbulator (13).

2. Device according to Claim 1, **characterized in that** the lubricant intake pipe (4)
a) has a first pipe segment (5), by means of which lubricant can be fed from the lubricant collecting container (2) to an inlet opening (11) of the sedimentation container (10), and
b) has a second pipe segment (6), by means of which lubricant emerging from an outlet opening (12) of the sedimentation container (10) can be delivered in the direction of the lubricant pump (3).

3. Device according to one of the preceding claims, **characterized**
**in that** the turbulator (13) is arranged in the region of an inlet opening (11) of the sedimentation container (10) .

4. Device according to one of the preceding claims, **characterized in that** the sedimentation container (10) has a drain connection (15) arranged in the bottom region (14) .

5. Device according to one of the preceding claims, **characterized in that** the sedimentation container (10) has a filling connection (16) and/or an inspection connection (17).

6. Device according to one of the preceding claims, **characterized in that** the sedimentation container forms a segment of the lubricant intake pipe which has an enlarged cross section.

7. Device according to one of the preceding claims, **characterized in that** the sedimentation container (10) is embodied as a separate component, which is connected fluidically to the lubricant intake pipe (4).

8. Device according to one of the preceding claims, **characterized in that** the lubricant intake pipe (4) has an intake cage (7) at the inlet end thereof.

9. Device according to one of the preceding claims, further comprising the lubricant collecting container (2) .

10. Device according to Claim 9, **characterized**
a) **in that** the sedimentation container (10) is integrated into the lubricant collecting container (2) and/or is encased by the latter; or
b) **in that** the sedimentation container is arranged outside the lubricant collecting container (2).

11. Device according to one of Claims 9 or 10, **characterized in that** the lubricant collecting container (2) is an oil pan of an internal combustion engine.

12. Device according to one of the preceding claims, further comprising the lubricant pump (3), in particular of an oil circuit of an internal combustion engine.

13. Device according to Claim 11 and 12, wherein the lubricant pump is designed to draw in lubricant from the oil pan via the lubricant intake pipe (4) and the sedimentation container (10) and to feed it to consuming units.

14. Motor vehicle, in particular commercial vehicle, having a device (1) according to one of the preceding claims.

## Revendications

1. Dispositif (1 ; 20) destiné à acheminer du lubrifiant d'un réservoir collecteur de lubrifiant (2) d'une machine ou d'une installation hydraulique, en particulier d'un moteur à combustion interne, à une pompe à lubrifiant (3), destinée en particulier à un circuit d'huile d'un moteur à combustion interne, le dispositif comprenant
un tuyau d'aspiration de lubrifiant (4), et
un récipient de sédimentation (10) qui est relié de manière fluidique au tuyau d'aspiration de lubrifiant (4), **caractérisé en ce que** le récipient de sédimentation (10) comprend un turbulateur (13).

2. Dispositif selon la revendication 1, **caractérisé en ce que** le tuyau d'aspiration de lubrifiant (4) comprend
a) une première portion de tuyau (5) au moyen de laquelle le lubrifiant peut être amené du récipient collecteur de lubrifiant (2) à une ouverture d'entrée (11) du récipient de sédimentation (10), et
b) une deuxième portion de tuyau (6) au moyen de laquelle du lubrifiant sortant d'une ouverture de sortie (12) du réservoir de sédimentation (10) peut être acheminé en direction d'une pompe à lubrifiant (3) .

3. Dispositif selon l'une des revendications précédentes, **caractérisé en ce que** le turbulateur (13) est disposé dans la région d'une ouverture d'entrée (11) du récipient de sédimentation (10).

4. Dispositif selon l'une des revendications précédentes, **caractérisé en ce que** le récipient de sédimentation (10) comporte un raccord de sortie (15) disposé dans la région de fond (14).

5. Dispositif selon l'une des revendications précédentes, **caractérisé en ce que** le récipient de sédimentation (10) comporte un raccord de remplissage (16) et/ou un raccord de contrôle (17).

6. Dispositif selon l'une des revendications précédentes, **caractérisé en ce que** le récipient de sédimentation forme une partie du tuyau d'aspiration du lubrifiant qui est pourvue d'élargissement en coupe transversale.

7. Dispositif selon l'une des revendications précédentes, **caractérisé en ce que** le réservoir de sédimentation (10) est conçu comme un composant séparé qui est relié de manière fluidique au tuyau d'aspiration de lubrifiant (4).

8. Dispositif selon l'une des revendications précédentes, **caractérisé en ce que** le tuyau d'aspiration de lubrifiant (4) comporte à son extrémité d'entrée un panier d'aspiration (7).

9. Dispositif selon l'une des revendications précédentes, comprenant en outre le récipient collecteur de lubrifiant (2).

10. Dispositif selon la revendication 9, **caractérisé en ce que**
a) le récipient de sédimentation (10) est intégré dans le récipient collecteur de lubrifiant (2) et/ou est entouré par celui-ci ; ou
b) le récipient de sédimentation est disposé à l'extérieur du récipient collecteur de lubrifiant (2).

11. Dispositif selon l'une des revendications 9 ou 10, **caractérisé en ce que** le récipient collecteur de lubrifiant (2) est un carter d'huile d'un moteur à combustion interne.

12. Dispositif selon l'une des revendications précédentes, comprenant en outre la pompe à lubrifiant (3), en particulier un circuit d'huile d'un moteur à combustion interne.

13. Dispositif selon les revendications 11 et 12, la pompe à lubrifiant étant conçue pour aspirer le lubrifiant du carter d'huile par le biais du tuyau d'aspiration de lubrifiant (4) et du réservoir de sédimentation (10) et pour l'acheminer à des consommateurs.

14. Véhicule automobile, en particulier véhicule utilitaire, comprenant un dispositif (1) selon l'une des revendications précédentes.
